# EUROPEAN PATENT APPLICATION

(11) **EP 4 155 810 A1**
(43) Date of publication of application: **29.03.2023**
(21) Application number: 21199434.8
(22) Date of filing: 28.09.2021
(51) Int. Cl.: G02B 27/01, G02B 27/00, F21V 8/00

(54) **OPTICAL APPARATUS, MODULES AND DEVICES**

(71) Applicant: Nokia Technologies Oy, 02610 Espoo (FI)
(72) Inventor: JÄRVENPÄÄ, Toni Johan, 37800 Akaa (FI); SALMIMAA, Marja Pauliina, 33610 Tampere (FI)
(74) Representative: Nokia EPO representatives

(57) **Abstract**

Examples of the disclosure relate to optical apparatus, modules and devices. The optical apparatus comprises a control panel and at least one light guiding means. The at least one light guiding means comprises at least; in-coupling diffractive means configured to in-couple one or more input beams of light into the light guiding means from a first light engine, expanding means configured to expand the one or more input beams of light, and out-coupling diffractive means configured to out-couple the one or more expanded beams of light from the light guiding means. The at least one light guiding means is transparent and is provided overlaying at least part of the control panel and is configured to display virtual images at a longer focal distance than the control panel.

## Description

### TECHNOLOGICAL FIELD

Examples of the disclosure relate to optical apparatus, modules and devices. Some relate to optical apparatus, modules and devices for providing images within a vehicle such as an automobile or an aircraft.

### BACKGROUND

Vehicles such as automobiles or aircraft comprise control panels that a user needs to look at while they are controlling the vehicle. When a user views the control panel they need to look away from the environment around them. When the user then looks back at the environment it can take some time for their eyes to adjust to the different focal distances of objects in the environment.

### BRIEF SUMMARY

According to various, but not necessarily all, examples of the disclosure there is provided an apparatus comprising:
a control panel;
at least one light guiding means comprising at least; in-coupling diffractive means configured to in-couple one or more input beams of light into the light guiding means from a first light engine, expanding means configured to expand the one or more input beams of light, and out-coupling diffractive means configured to out-couple the one or more expanded beams of light from the light guiding means;
wherein the at least one light guiding means is transparent and is provided overlaying at least part of the control panel and is configured to display one or more virtual images at a longer focal distance than the control panel.

The apparatus may comprise a plurality of light guiding means arranged in a stacked configuration.

The apparatus may comprise a plurality of light guiding means where a first light guiding means is configured to display a virtual image at a first focal distance and a second light guiding means is configured to display a virtual image at a second focal distance.

The control panel and the plurality of light guiding means may be configured so that the images at different focal distances provide one or more volumetric images.

The apparatus may comprise a head-up display.

The focal distance of the light guiding means overlaying the control panel may be aligned to a focal distance of the head-up display.

A gap may be provided between the at least one light guiding means and the control panel.

The at least one light guiding means may be provided directly over the control panel.

The apparatus may comprise means for adjusting the focal distance of one or more virtual images provided by the apparatus.

The focal distance of the at least one light guiding means may be set to infinity.

The focal distance of the at least one light guiding means may be set to a far or middle distance.

The apparatus may be configured to enable the focal distance of the at least one light guiding means to be adjusted.

The at least one light guiding means may be configured to display a first image for a user's first eye and a second image for a user's second eye.

According to various, but not necessarily all, examples of the disclosure there is provided an apparatus comprising:
a control panel;
at least one light guide comprising at least; in-coupling diffractive elements configured to in-couple one or more input beams of light into the light guide from a first light engine, one or more expanders configured to expand the one or more input beams of light, and out-coupling diffractive elements configured to out-couple the one or more expanded beams of light from the light guide;
wherein the at least one light guide is transparent and is provided overlaying at least part of the control panel and is configured to display virtual images at a longer focal distance than the control panel.

According to various, but not necessarily all, examples of the disclosure there may be provided a module, a device, a vehicle or cab for a vehicle comprising an apparatus as described herein.

### BRIEF DESCRIPTION

Some examples will now be described with reference to the accompanying drawings in which:
FIG. 1 shows an example light guiding means;
FIG. 2 shows an example apparatus;
FIG. 3 shows an example apparatus in a vehicle;
FIGS. 4A and 4B show an example apparatus in use;
FIG. 5 shows an example apparatus in use;
FIGS. 6A and 6B show an example apparatus in use;
FIGS. 7A and 7B show an example apparatus in use; and
FIGS. 8A and 8B show example images that can be displayed by an apparatus.

### DETAILED DESCRIPTION

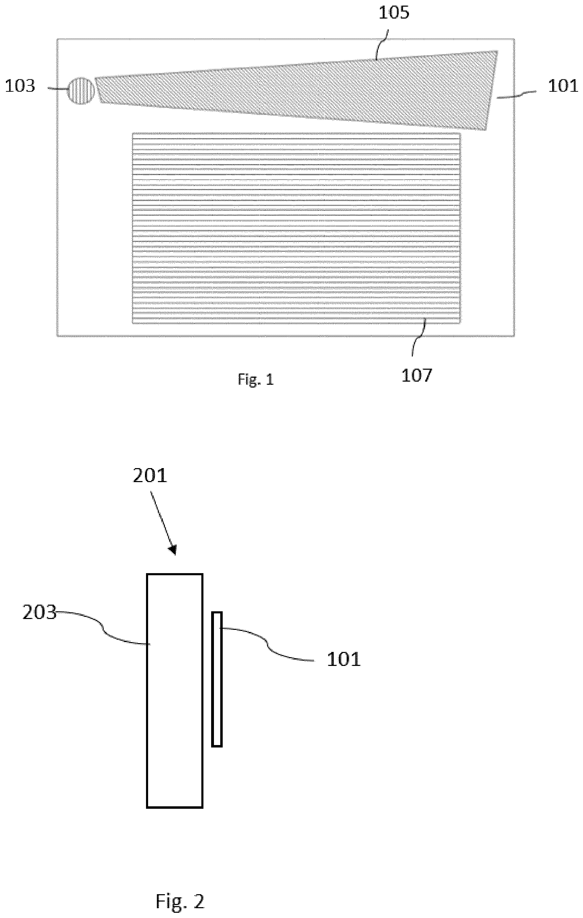

Fig. 1 shows an example light guiding means 101 that can be used in examples of the disclosure. The light guiding means 101 can be formed on a waveguide, an optical substrate, a transparent plate or any other suitable material.

In this example the light guiding means 101 comprises an exit pupil expander. The exit pupil expander is configured to increase the size of an exit pupil from a light engine or other optical arrangement. The light engine could be a display means such as a projection engine.

The light guiding means 101 comprises in-coupling diffractive means 103, expanding means 105, and out-coupling diffractive means 107.

The in-coupling diffractive means 103 comprise any means that is configured to in-couple one or more beams of light from a light engine into the light guiding means 101. The in-coupling diffractive means 103 is positioned within the light guiding means 101 so that, in use, the in-coupling diffractive means 103 can be positioned adjacent to the light engine.

The in-coupled beam of light travels through the light guiding means 101 via total internal reflection. The refractive index of the material that is used for the light guiding means 101, the wavelength of the in-coupled beam, and the parameters of the in-coupling diffractive means 103 determine the total internal reflection angles.

The expanding means 105 is positioned within the light guiding means 101 so that the in-coupled beam of light is provided from the in-coupling diffractive means 103 to the expanding means 105.

The expanding means 105 comprise any means that is configured to expand the in-coupled beam of light in at least one dimension. The expanding means 105 can comprise a diffractive means such as a diffraction grating or any other suitable means. In the diffraction grating the in-coupled beam of light is split into two with every internal reflection. The two split sections of the beam travel in different directions and continue splitting and so expand the exit pupil of the light engine. In the example shown in Fig. 1 the expanding means 105 has a grating which expands the beam in a horizontal direction.

The out-coupling diffractive means 107 is positioned within the light guiding means 101 so that the horizontally expanded beam of light is provided from the expanding means 105 to the out-coupling diffractive means 107.

The out-coupling diffractive means 107 comprises any means that is configured to out-couple the horizontally expanded light beam out of the light guiding means. The out-coupling diffractive means 107 can function in a similar manner to the expanding means 105 so that the expanded beam of light is split into two with every internal reflection. The out-coupling diffractive means 107 can also be configured to expand the horizontally expanded beam of light in a second dimension. In the example shown in Fig. 1 the out-coupling diffractive means 107 has a horizontal grating which expands the horizontally expanded beam in the vertical direction.

The light guiding means 101 is configured so that the out-coupled expanded beam of light can be viewed by a user. The out-coupled expanded beams of light provide a virtual image that can be observed by a user. The out-coupled beam of light therefore provides an expanded exit pupil.

It is to be appreciated that the variations in the size, shape, position, and expansion direction of the different diffractive means are examples and that other variations could be used in other examples of the disclosure. For example, the expanding means 105 could expand the light beam in some other direction than horizontal. As another example, the out-coupling diffractive means 107 could expand the beam in some other direction than vertical. As a third example, the exit pupil of the beam of light in-coupled by the in-coupling diffractive means 103 would be expanded in the first expansion dimension already prior to in-coupling the beam into the light guiding means 101. In this example there would be no expanding means 105 positioned within the light guiding means 101.

The diffractive means that are used for the in-coupling diffractive means 103, expanding means 105, and out-coupling diffractive means 107 can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings or any suitable optical component or feature having a periodic structure that splits and diffracts light into several beams travelling in different directions.

Fig. 2 schematically shows a side view of an example apparatus 201. The apparatus 201 comprises a light guiding means 101 and a control panel 203. The apparatus 201 can comprise additional components that are not shown in Fig. 2. For instance, the apparatus 201 could comprise a HUD, coatings to reduce reflections, and/or any other suitable components.

The control panel 203 can comprise a control panel for a vehicle or a cab of a vehicle. For instance, the control panel 203 could comprise the dashboard in car or other type of automobile. The control panel 203 could also comprise the control panel of an aircraft such as an aeroplane. In some examples the control panel 203 could be provided within a cab that can be attached to a vehicle or machinery. For instance, the control panel 203 could be provided within a cab that could be coupled to a digger or crane.

The control panel 203 can comprise any means that can be configured to provide information relating to the function of a vehicle associated with the control panel 203. For instance, the control panel 203 could comprise one or more gauges or other means for displaying information. The information that is displayed by the control panel 203 could relate to the speed of the vehicle, a current operating mode of the vehicle, the location of the vehicle, a fuel status of the vehicle, information from a reversing camera or any other suitable type of information.

The light guiding means 101 could be as shown in Fig. 1. The light guiding means 101 could comprise an exit pupil expander or any other suitable type of light guiding means 101.

The light guiding means 101 could comprise an in-coupling diffractive means 103, an expanding means 105 and an out-coupling diffractive means 107. The in-coupling diffractive means 103 can be configured to in-couple one or more input beams of light into the light guiding means 101 from a first light engine. The expanding means 105 can be configured to expand the one or more input beams of light. The out-coupling diffractive means 107 can be configured to out-couple the one or more expanded beams of light from the light guiding means 101.

In some examples the in-coupling diffractive means 103, expanding means 105 and out-coupling diffractive means 107 can be arranged as shown in Fig. 1. Other arrangements of the in-coupling diffractive means 103, expanding means 105 and out-coupling diffractive means 107 could be used in other examples of the disclosure.

The light guiding means 101 and the control panel 203 can be integrated into a single apparatus 201. The light guiding means 101 and the control panel 203 can be provided as a single unit.

The light guiding means 101 can be positioned within the apparatus 201 so that it overlays at least part of the control panel 203. In some examples the light guiding means 101 could overlay all of the control panel 203. In some examples the out-coupling diffractive means 107 of the light guiding means 101 could overlay all of the control panel 203.

In some examples the light guiding means 101 can be positioned so that it is in contact with the surface of the control panel 203. In such examples the light guiding means 101 can be provided directly overlaying the control panel 203 so that no gap is provided between the control panel 203 and the light guiding means 101. In other examples a gap could be provided between the control panel 203 and the light guiding means 101.

The light guiding means 101 can be transparent. The light guiding means 101 can be transparent so that the control panel 203, or at least part of the control panel 203 can be viewed through the light guiding means 101.

The light guiding means 101 is configured to display virtual images to a user of the control panel 203. For instance, if the control panel 203 comprises the dashboard of a car the light guiding means 101 is configured to display virtual images to the driver.

The light guiding means 101 is configured so that the virtual images are displayed at a longer focal distance than the control panel 203. For example the virtual images can be displayed at a longer focal distance than the distance to the control panel 203 and/or at a longer focal distance than images displayed on the control panel 203. The control panel 203 is positioned at a given distance from a user. This may be within a short focal range. The virtual images that are displayed by the light guiding means 101 can be in a longer focal range. The virtual images that are displayed by the light guiding means 101 can be in a mid-range focal distance or in a long-range focal distance. In such examples the focal distance of the light guiding means 101 is set to a far or middle distance. For instance, a curved light guiding means 101 could be used or optical components such as lenses could be used to adjust the focal distance of a flat light guiding means 101. In some examples the virtual images that are displayed by the light guiding means 101 can be focused at infinity. In such examples the focal distance of the at least one light guiding means 101 is set to infinity. For instance, a flat light guiding means 101 could be used.

In some examples focal distance of the virtual images that are displayed by the light guiding means 101 can be aligned with other objects that the user might be looking at. The aligning can be matching the focal distance or having the focal distances within a given range of each other. For example, if the user is also using a head up-display (HUD) the focal distance of the virtual images displayed by the light guiding means 101 could be matched to the focal distance of the HUD. In this example the HUD can have a fixed and known focal distance and so matching the focal distance of the images from the light guiding means 101 to the images in the HUD is possible.

In other examples the user could also be looking at objects around the vehicle. For instance, the user could be looking at a road and other vehicles and potential hazards on the road. In such examples it might not be feasible to align the focal distances of the virtual images and the potential hazards exactly. However, the focal distance of the virtual images from the light guiding means 101 could be provided within a threshold of the expected focal distance of such objects.

In some examples the light guiding means 101 can be configured so that the virtual images are only visible to the user of the control panel 203. For instance, the virtual images could be displayed so that they can be viewed by the driver of a vehicle but not by any of the passengers in the vehicle. In some examples the exit pupil of the light guiding means 101 can be controlled so that the virtual images are only visible to the user of the control panel 203.

The images provided by the light guiding means 101 can comprise any useful information for the driver or controller of the vehicle. The images provided by the light guiding means 101 can comprise information relating to the speed of the vehicle, a current operating mode of the vehicle, the location of the vehicle, a fuel status of the vehicle, information from a reversing camera or any other suitable type of information. The information that is displayed in the virtual images could comprise a subset of information that is displayed in the control panel 203. In some examples the information that is displayed in the virtual images could comprise the most important or critical information for the user of the vehicle. The information that is displayed in the virtual images can be related to the environment or the objects around the vehicle.

In the example shown in Fig. 2 the apparatus 101 comprises a single light guiding means 101. In other examples the apparatus 101 could comprise a plurality of light guiding means 101. The plurality of light guiding means 101 could be arranged in a stacked configuration. The plurality of light guiding means 101 could be arranged in a stacked configuration overlaying the control panel 203 so that each of the light guiding means 101 within the stack, at least partially, overlays the control panel 203. The plurality of light guiding means 101 could be arranged in a stacked configuration overlaying the control panel 203 so that each of the light guiding means 101 within the stack, at least partially, overlays each other. Other arrangements for the light guiding means 101 could be used in other examples of the disclosure.

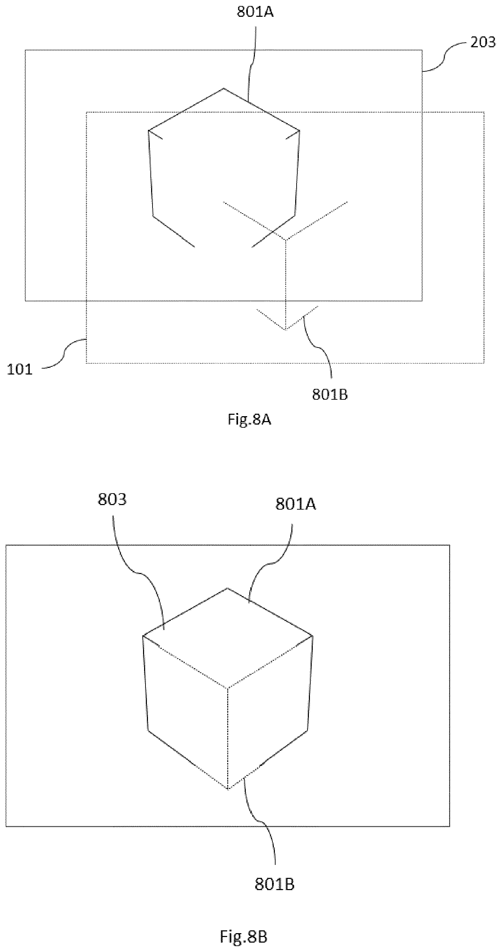

In examples where the apparatus 201 comprises a plurality of light guiding means 101 the plurality of light guiding means 101 can be configured so that a first light guiding means provides a virtual image at a first focal distance and a second light guiding means provides a virtual image at a second focal distance. The images at different focal distances can be configured to provide volumetric images. Examples of volumetric images are shown in Fig. 8.

In some examples volumetric images could be formed by the control panel 203 and one or more light guiding means 101 providing overlaying at least part of the control panel 203. For instance, a first light guiding means 101 can be configured to provide a virtual image at a first focal distance and the control panel 203 can be configured to provide a real image at a second focal distance. The images at different focal distances can be configured to provide volumetric images

In examples where the apparatus 201 comprises a plurality of light guiding means 101 the plurality of light guiding means 101 can be configured to multiplex colours of the virtual images, to multiplex the focal distances of the virtual images, to control the field of view of the virtual images, to control parameters of the exit pupil or to control any other features.

The apparatus 201 can comprise additional components that are not shown in Fig. 2. For instance, in some examples the apparatus 201 can comprise means for adjusting the focal distance of the virtual images provided by the apparatus 201. In some examples the focal distance of the virtual images could be adjusted by adjusting the light guiding means 101. In such examples one or more optical components could be provided and used to adjust the focal distance of the light guiding means 101. The optical components could comprise one or more lenses or any other suitable components.

In some examples the focal distance of the virtual images could be adjusted by using different light guiding means 101. For instance, the apparatus 201 could comprise a plurality of light guiding means 101 where different light guiding means 101 provide virtual images at different focal distances. The apparatus 201 could be configured to enable different light guiding means 101 to be selected as appropriate.

The different focal distances of the virtual images could be selected for any suitable reason. For instance, the different focal distances could be selected to account for users of different heights or to account for different HUDs or for any other suitable reason. In some examples the adjusting of the focal distance apparatus 201 could be manual. In such examples the adjusting of the focal distance could occur in response to one or more user inputs. In some examples the adjusting of the focal distance apparatus 201 could be automatic. In such examples the adjusting of the focal distance could occur without any specific user input. In such examples the adjusting of the focal distance could occur in response to an input other than a user input, such as the detection of the height of the driver.

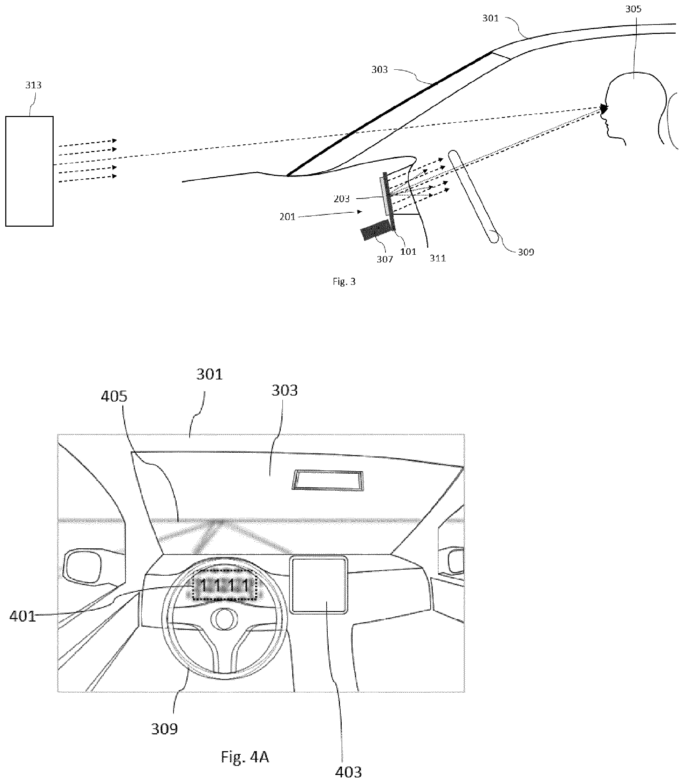

Fig. 3 shows an example apparatus 201 in a vehicle 301. In this example the apparatus 201 is provided within a car. In other examples the apparatus 201 could be used in other vehicles or aircraft or cabs for vehicles.

In the example of Fig. 3 the apparatus 201 comprises a control panel 203 and a light guiding means 101. The control panel 203 comprises the dashboard of the vehicle 301 in this example. The control panel 203 is provided behind a screen 311. The screen can be configured to prevent glare and can be configured to protect the control panel 203. The control panel 203 and the screen 311 are provided behind the steering wheel 309 of the vehicle 301. The control panel 203 is positioned so that a driver 305 of the vehicle 301 can view the control panel 203 through the steering wheel 309. The control panel 203 is positioned so that when a driver 305 is driving the vehicle 301 the control panel 203 is around 70-90cm away.

The light guiding means 101 is positioned between the control panel 203 and the screen 311. In the example of Fig. 3 the light guiding means 101 can be positioned so that it is in contact with the surface of the control panel 203. The light guiding means 101 is provided directly overlaying the control panel 203 so that only a very small gap or no gap is provided between the control panel 203 and the light guiding means 101. In this example a larger gap is provided between the light guiding means 101 and the screen 311.

The light guiding means 101 is coupled to a light engine 307. The light engine 307 can comprise a projector or any other suitable means. The light engine can be configured to provide images to the in-coupling diffractive means 103 of the light guiding means 101. The light engine 307 can be controlled to control the images that are displayed by the light guiding means 101.

When the driver 305 is driving the vehicle 301 the driver 305 can look through the wind screen 303 at objects 313 that are positioned in front of the vehicle 301. For instance, the driver 305 needs to be aware of what is on the road and any other hazards or objects 313 around the vehicle 313. To view the objects 313 the driver 305 focuses their eyes to a focal point that is in a far range.

When the driver 305 wishes to view the control panel 203 the driver 305 has to look down at the control panel 203. As the control panel 203 is positioned close to the driver 305 the driver 305 has to adjust the focus of their eyes to a near range.

In examples of the disclosure the addition of the light guiding means 101 to the control panel enables some information to be displayed at a different focal distance. For instance, the information displayed by the light guiding means 101 can be displayed with a focal distance corresponding to, or aligned with, the other objects 313 that the driver 305 might need to look at. The driver 305 can therefore view the information provided by the light guiding means 101 by keeping their eyes focused to a far range focal point.

The apparatus 201 therefore enables a driver 305 of a vehicle to easily view both objects 313 around the vehicle 301 and information displayed by the apparatus 201 without having to adjust the focus of their eyes. The adjusting of the focus of their eyes can take some time. This inherent latency can make it difficult for the driver 305 to interpret visual signals and can increase the risk of accidents occurring. Removing the need for making this adjustment can help therefore the driver 305 to identify hazards when they change between viewing the information form the apparatus 201 and viewing the environment around the vehicle 301.

In some examples the light guiding means 101 can be configured so that the virtual images are only visible to the driver 305 of the vehicle. This can be achieved by controlling one or more parameters of the light guiding means 101. The parameters of the light guiding means 101 that can be controlled could comprise the size and shape of the out-coupling diffractive means 107 or any other suitable parameters. The size and shape of the out-coupling diffractive means 107 can be designed so that the virtual images are positioned so that only the driver 305 of the vehicle 301 can view them. This can enable the light guiding means 101 to be used to display personal or private information.

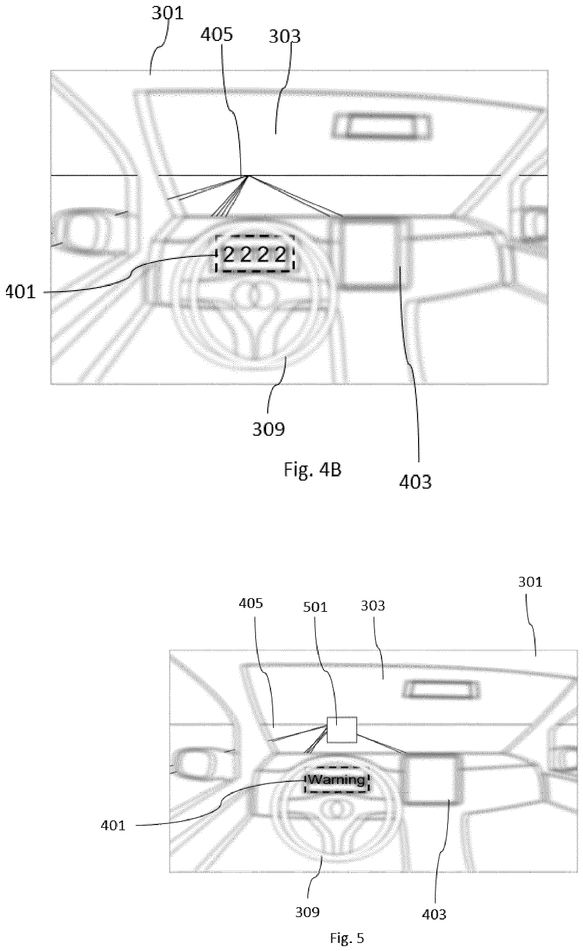

Figs. 4A and 4B show an example apparatus 201 in use. The apparatus 201 can comprise an apparatus 201 as shown in Fig. 3 in which a light guiding means 101 is provided overlaying a control panel 203 and configured to provide virtual images to the driver 305. This example shows the apparatus 201 in use in a car. The apparatus 201 could be used in other types of vehicle.

Fig. 4A shows how the apparatus 201 appears when the driver 305 focusses their eyes to a near focal point.

In the example of Fig. 4A the environment 405 around the vehicle 301 appears out of focus. The virtual images 401 displayed by the light guiding means 101 are also out of focus. The control panel 203 would be in focus. The control panel 203 could be viewed through the light guiding means 101. In the example of Fig. 4A an auxiliary control panel 403 is shown in focus. The auxiliary control panel 403 is provided to the side of the steering wheel 309 and can be configured to display navigation information or other suitable types of information.

Fig. 4B shows how the apparatus 201 appears when the driver 305 focusses their eyes to a far focal point.

In the example of Fig. 4B the environment 405 around the vehicle 301 appears in focus. The virtual images 401 displayed by the light guiding means 101 are also in focus. The control panel 203 and the auxiliary control panel 403 are out of focus.

Having both the virtual images 401 displayed by the light guiding means 101 and the environment 405 around the vehicle 301 in focus enables the driver 305 to switch between viewing the environment 405 and viewing the virtual images 401 displayed by the light guiding means 101 without having to refocus their eyes. This can reduce the risk of the driver 305 not noticing a hazard because they are focussed on the control panel 203 or because their eyes are still adjusting to look at the environment 405.

Fig. 5 shows an example apparatus 201 in use. The apparatus 201 can be as shown in Figs. 3 and 4A and 4B or could be any other suitable type of apparatus 201.

In the example of Fig. 5 the light guiding means 101 is configured to display warning information in the virtual images 401. The warning information could be displayed in response to a hazard 501 being detected. In this example the hazard 501 is an obstruction the road in front of the vehicle 301. Other types of warning for other types of hazards could be provided in other examples.

In this example both the warning information displayed by the light guiding means 101 and the object 501 appear in focus at the same time. The focus distance of the warning information displayed by the light guiding means 101 can be aligned to be the same as or similar to the focus distance for the hazard object 501. This can enable a driver 305 to easily switch between viewing the warning information and the hazard 501. For instance, in some examples the distance between the hazard object 501 and the vehicle 301 can be estimated. The focal length of the virtual images displayed by the apparatus 201 can then be adjusted to be matched, or substantially matched, to the distance of the hazard object 501. The focal length of the virtual images can be adjusted by uses of one or more optical components such as lenses or by selecting a light guiding means 101 from a stack of available light guiding means 101 or by any other suitable means.

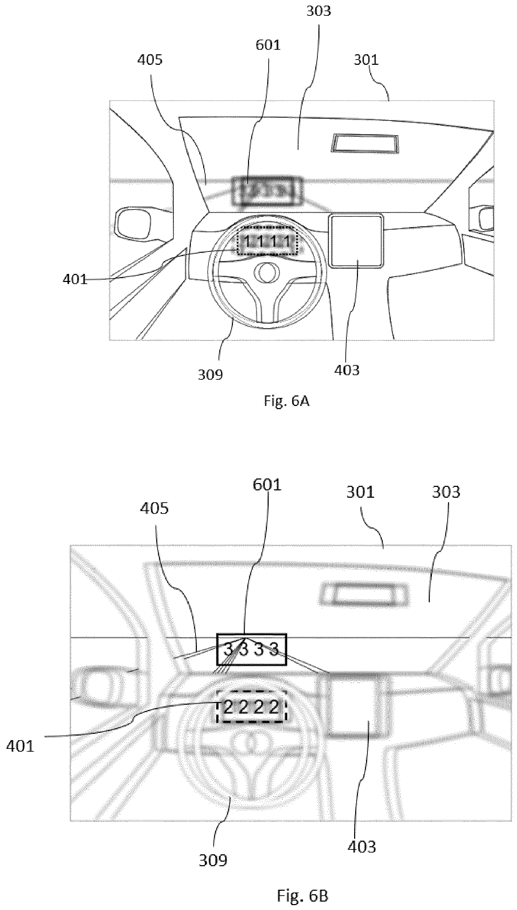

Figs. 6A and 6B show another example apparatus 201 in use. In this example the apparatus 201 comprises a HUD 601 in addition to the light guiding means 101 provided overlaying a control panel 203. This example shows the apparatus 201 in use in a car. Other types of vehicles could be used in other examples.

The HUD 601 is displayed on the windscreen 303 in a location above the steering wheel 309. The HUD 601 could be displayed in other locations in other examples of the disclosure.

The HUD 601 can be any suitable type of HUD 601. The HUD 601 could be a projector HUD configured so that virtual images are projected from the windscreen. In some examples the HUD 601 could comprise one or more light guiding means 101. The one or more light guiding means 101 could be as shown in Fig. 1. The light guiding means 101 could be configured to display virtual images to the driver 305. Other types of HUD 601 could be used in other examples of the disclosure.

Fig. 6A shows how the apparatus 201 and HUD 601 appear when the driver 305 focusses their eyes to a near focal point.

In the example of Fig. 6A the environment 405 around the vehicle 301 and the virtual images 401 displayed by the light guiding means 101 are out of focus. The images displayed by the HUD 601 are also out of focus. In this example the control panel 203 could be viewed through the light guiding means 101 and would be in focus. The auxiliary control panel 403 provided to the side of the steering wheel 309 is also in focus.

Fig. 6B shows how the apparatus 201 and HUD 601 appear when the driver 305 focusses their eyes to a far focal point.

In the example of Fig. 6B the environment 405 around the vehicle 301 and the virtual images 401 displayed by the light guiding means 101 appear in focus. The images displayed by the HUD 601 also appear to be in focus. The control panel 203 and the auxiliary control panel 403 are out of focus.

In this example the focal distance of the light guiding means 101 overlaying the control panel 203 can be aligned to the focal distance of the HUD 601. The focal distance of the light guiding means 101 can be the focal distance of the virtual images displayed by the light guiding means 101. In some examples the focal distance can be matched to the focal distance of the HUD 601. In other examples the focal distance can be aligned so that it is similar to the focal distance of the HUD 601 or within a predefined threshold of the focal distance of the HUD 601.

Having the virtual images 401 displayed by the light guiding means 101 aligned to the focal distance of the HUD 601 enables the driver 305 to switch between viewing the environment 405 and viewing the virtual images 401 displayed by the light guiding means 101 and also the HUD 601 without having to refocus their eyes. This can reduce the risk of the driver 305 not noticing a hazard or critical information displayed on the HUD 601 because they are focussed on the control panel 203 or because their eyes are still adjusting to look at the environment 405 or HUD 601.

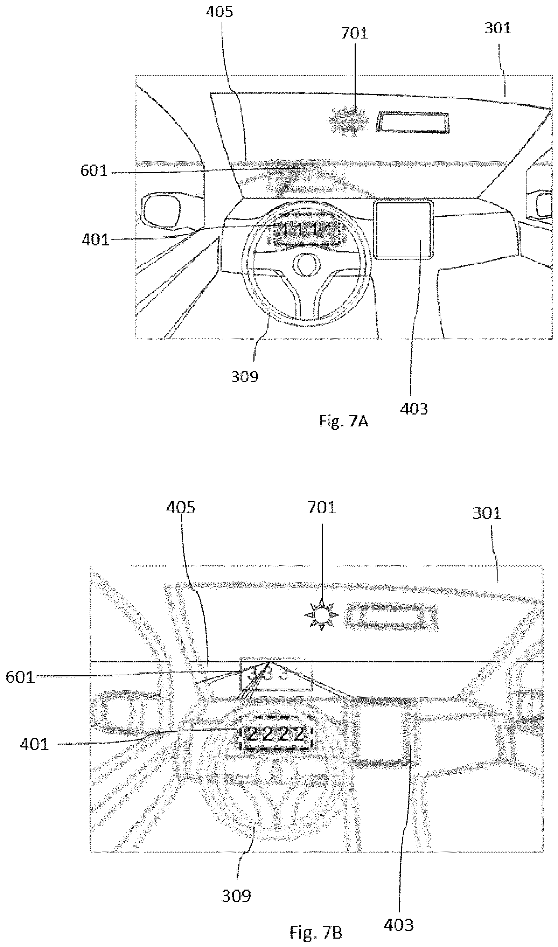

Figs. 7A and 7B show another example apparatus 201 in use. In this example the apparatus 201 comprises also HUD 601 in addition to the light guiding means 101 provided overlaying a control panel 203. This example apparatus 201 can be the same as the apparatus 201 shown in Figs. 6A and 6B.

In the example of Figs. 7A and 7B the apparatus 201 is in use in a car. Other types of vehicles could be used in other examples.

In the example of Figs. 7A and 7B the visibility conditions for the HUD 601 are poor. The visibility of HUD 601 can be affected by bright lights or any other suitable factor. In the example of Figs. 7A and 7B the visibility of the HUD 601 is reduced due to bright sunlight 701. Other sources of bright light could be the headlights of oncoming vehicles or any other suitable source. Other examples of poor visibility conditions for the HUD 601 could include unwanted diffraction effects propagating towards the driver 305, caused by the bright lights on the diffraction gratings off the light guiding means 101.

Fig. 7A shows how the apparatus 201 and HUD 601 appear when the driver 305 focusses their eyes to a near focal point.

In the example of Fig. 7A the environment 405 around the vehicle 301 and the virtual images 401 displayed by the light guiding means 101 are out of focus. The images displayed by the HUD 601 are also out of focus. In this example the control panel 203 could be viewed through the light guiding means 101 and would be in focus. The auxiliary control panel 403 provided to the side of the steering wheel 309 is also in focus.

Fig. 7B shows how the apparatus 201 and HUD 601 appear when the driver 305 focusses their eyes to a far focal point.

In the example of Fig. 7B the environment 405 around the vehicle 301 appear in focus. The images displayed by the HUD 601 also appear to be in focus however they appear to be washed out due to the bright light from the sun 701. The virtual images 401 displayed by the light guiding means 101 appear in focus. These images are not washed out because they are positioned out of the direct path of the bright sunlight.

The control panel 203 and the auxiliary control panel 403 are out of focus.

In this example the light guiding means 101 supports the HUD 601 as the information displayed by the light guiding means 101 is still visible, and at a similar focal distance, even when the HUD 601 appears to be washed out. This can enable the light guiding means 101 to be used as a back-up for the HUD 601. The information displayed on the light guiding means 101 can be the same as the information displayed on the HUD 601 or can comprise at least some of the same information as is displayed on the HUD 601. This enables the information to always be available to the driver 305 at a long-range or mid-range focal distance, even during poor visibility conditions for the HUD 601.

Figs. 8A and 8B show volumetric images that can be displayed by the apparatus 201 in some examples of the disclosure. In this example the apparatus 201 comprises a control panel 203 and a light guiding means 101. In other examples the volumetric images could be displayed by a plurality of light guiding means 101.

The control panel 203 provides a first image image 801A at a first focal distance and the light guiding means 101 provides a second virtual image 801B at a second focal distance. In this example the first focal distance is longer than the second focal distance so that the first image 801A appears to be further away than the second virtual image 801B.

Fig. 8A schematically shows the control panel 203 and the light guiding means 101 and the respective images 801A and 801B. In this example the first image 801A comprises a rear section of a cube and the second virtual image 801B comprises a front section of a cube.

Fig. 8B shows how the two images 801A and 801B would appear to the user. The light guiding means 101 and the control panel 203 can be configured so that the images 801A and 801B appear to be volumetric or three dimensional or include a depth effect. In the example of Fig. 8B the light guiding means 101 and the control panel 203 are configured so that the two images 801A and 801B are aligned to provide combined image 803. In this example the combined image 803 comprises a cube that appears three dimensional to the user.

In the examples of Figs. 8A and 8B the combined image 803 comprises a cube. Other types of image could be provided to a user in other examples of the disclosure. For example, the combined virtual image could comprise warning information about hazards or any other suitable information.

Other arrangements of the virtual images could be used in other examples of the disclosure. For instance, the apparatus 201 could be configured so that the light guiding means 101 is configured to display a first image for a user's first eye and a second image for a user's second eye. In some examples the apparatus 201 can comprise a plurality of different light guiding means 101 and these can be configured so that different images for the different eyes can be displayed by the different light guiding means 101. This can enable binocular or stereoscopic images to be provided by the apparatus 201.

Variations and modifications can be made to the examples shown in the Figs. And described above. For instance, in some examples the apparatus 201 can be configured to enable the position of the exit pupil of the apparatus 201 to be adjusted. The exit pupil of the apparatus 201 can be adjusted to account for the height or position of the driver 305 or for any other suitable purpose. The adjustment could be a mechanical adjustment. For example, the apparatus 201 or parts of the apparatus 201 could be tilted or otherwise moved so as to adjust the position of the exit pupil. The light engine 307 or the light guiding means 101 or any other suitable parts of the apparatus 201 can be moveable so as to enable the position of the exit pupil to be adjusted.

The moveable parts of the apparatus 201 can be configured to allow for manual adjustment of the position of the exit pupil. In some examples the moveable parts of the apparatus 201 can be configured to be adjusted to correspond to a position of the HUD 601 or any other suitable parts of the vehicle or apparatus 201. For instance, if a user adjusts the position of the HUD 601 a corresponding adjustment to the position of the exit pupil of the apparatus 201 could be made automatically without any further user input.

Examples of the disclosure therefore provide an apparatus 201 for blending virtual and real images. The virtual images can be configured to have a focal distance that is aligned with the real images. This can enable a user to easily switch between viewing the virtual images and viewing the real images. This can be useful for drivers of vehicles where the driver should be constantly aware both of potential hazards in their environment and also information being displayed on a control panel 203.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
a control panel;
at least one light guiding means comprising at least; in-coupling diffractive means configured to in-couple one or more input beams of light into the light guiding means from a first light engine, expanding means configured to expand the one or more input beams of light, and out-coupling diffractive means configured to out-couple the one or more expanded beams of light from the light guiding means;
wherein the at least one light guiding means is transparent and is provided overlaying at least part of the control panel and is configured to display one or more virtual images at a longer focal distance than the control panel.

2. An apparatus as claimed in claim 1 comprising a plurality of light guiding means arranged in a stacked configuration.

3. An apparatus as claimed in any preceding claim comprising a plurality of light guiding means where a first light guiding means is configured to display a virtual image at a first focal distance and a second light guiding means is configured to display a virtual image at a second focal distance.

4. An apparatus as claimed in claim 3 wherein the control panel and the plurality of light guiding means are configured so that the images at different focal distances provide one or more volumetric images.

5. An apparatus as claimed in any preceding claim comprising a head-up display.

6. An apparatus as claimed in claim 5 wherein the focal distance of the light guiding means overlaying the control panel is aligned to a focal distance of the head-up display.

7. An apparatus as claimed in any preceding claim wherein a gap is provided between the at least one light guiding means and the control panel.

8. An apparatus as claimed in any of claims 1 to 6 wherein the at least one light guiding means is provided directly over the control panel.

9. An apparatus as claimed in any preceding claim comprising means for adjusting the focal distance of one or more virtual images provided by the apparatus.

10. An apparatus as claimed in any preceding claim wherein the focal distance of the at least one light guiding means is set to infinity.

11. An apparatus as claimed in any of claims 1 to 9 wherein the focal distance of the at least one light guiding means is set to a far or middle distance.

12. An apparatus as claimed in any preceding claim wherein the apparatus is configured to enable the focal distance of the at least one light guiding means to be adjusted.

13. An apparatus as claimed in any preceding claim wherein the at least one light guiding means is configured to display a first image for a user's first eye and a second image for a user's second eye.

14. A module, a device, a vehicle or cab for a vehicle comprising an apparatus as claimed in any preceding claim.
